# EUROPÄISCHE PATENTSCHRIFT

(11) **EP 2 653 427 B1**
(45) Veröffentlichungstag und Bekanntmachung des Hinweises auf die Patenterteilung: **19.07.2017**
(21) Anmeldenummer: 13163770.4
(22) Anmeldetag: 15.04.2013
(51) Int. Cl.: B66D 3/18, B66D 1/56, B66D 1/48, B66D 1/46, B66D 1/40, B25J 13/08, B25J 13/02

(54) **Steuerverfahren für ein Balancier-Hebezeug und Balancier-Hebezeug hiermit**
Control method for a balancing lifting gear and balancing lifting gear herewith
Procédé de commande pour un engin de levage à balancier et engin de levage à balancier doté de celui-ci

(30) Priorität: 20.04.2012 DE 102012103515
(43) Veröffentlichungstag der Anmeldung: 23.10.2013
(73) Patentinhaber: Terex MHPS GmbH, 40597 Düsseldorf (DE)
(72) Erfinder: Freitag, Holger, 44894 Bochum (DE); Maccioni, Giorgio, 58455 Witten (DE); Persico, Giuliano, 58300 Wetter (DE)
(74) Vertreter: Moser Götze & Partner Patentanwälte mbB

(56) Entgegenhaltungen:
- EP-A1- 2 177 308
- WO-A1-00/69771
- WO-A1-98/43911

## Beschreibung

Die Erfindung betrifft ein Steuerverfahren für ein Balancier-Hebezeug, das einen über eine Steuerung ansteuerbaren Hubmotor umfasst, der über einen Steuergriff mit einem Kraftsensor ein Lastaufnahmemittel hebt und senkt, in dem in einem Betriebsmodus "Balancieren" über die Steuerung das Lastaufnahmemittel mit oder ohne einer aufgenommenen Last in Antwort auf eine Kraft eines Bedieners angehoben beziehungsweise abgesenkt wird.

Auch betrifft die Erfindung ein Balancier-Hebezeug, das einen über eine Steuerung ansteuerbaren Hubmotor umfasst, der über einen Steuergriff mit einem Kraftsensor ein Lastaufnahmemittel hebt und senkt.

Aus der deutschen Gebrauchsmusterschrift DE 201 00 584 U1 ist ein sogenanntes Balancier-Hebezeugs beziehungsweise ein sogenannter Seilbalancer bekannt. Ein Seilbalancer besteht im Wesentlichen aus einem Seilzug, einem Steuergriff und einem Lastaufnahmemittel und ermöglicht einem Bediener, eine an dem Lastaufnahmemittel befestigte Last in einer Art Schwebezustand nahezu schwerelos zu heben oder zu senken. Eine dem Seilzug zugeordnete Steuerung balanciert die Gewichtskraft der Last aus, so dass eine auf die Last, das Lastaufnahmemittel oder den Steuergriff aufgebrachte Handkraft des Bedieners ein Heben oder Senken der Last bewirkt, je nachdem in welche Richtung die Handkraft wirkt. In der Steuerung kann vorgesehen sein, dass proportional zu der aufgebrachten Kraft die Hub- oder Senkgeschwindigkeit gewählt wird. Um die Handkraft zu ermitteln, ist in dem Steuergriff am Übergang vom oberen Ende des Steuergriffs zu dem Seil ein Kraftsensor angeordnet. Über diesen Kraftsensor kann auch das Gewicht der Last gemessen werden und über eine Gewichtskraftänderung die Handkraft bestimmt werden, die als Steuergröße für die Steuerung und die hieraus bestimmte Hub- oder Senkgeschwindigkeit dient. Auch kann in der Steuerung das Ansprechverhalten des Seilbalancers von sanft bis aggressiv eingestellt werden. Neben dem vorbeschriebenen Betriebsmodus "Balancieren" ist ein weiterer Betriebsmodus "Auf-/Absteuerung" vorgesehen. Hierfür ist an dem Steuergriff ein Betätigungsring vorgesehen, der von einem Daumen des Bedieners mit einer Daumenkraft in Auf-oder Abwärtsrichtung betätigt werden kann. Der Betätigungsring ist mit einem weiteren Kraftsensor verbunden, dessen Signale der Steuerung zum Heben und Senken der Last zugeführt werden. Bei Benutzung des Betätigungsrings wird automatisch von Betriebsmodus "Balancieren" in den Betriebsmodus "Auf-/Absteuerung" umgeschaltet.

Es ist allgemein bekannt, dass derartige Balancier-Hebezeuge beziehungsweise Seilbalancer bei unterschiedlichen industriellen Prozessen Anwendung finden, in denen Lasten durch einen Bediener bewegt und exakt positioniert werden. Dies betrifft beispielsweise Fertigungsprozesse, bei denen ein Bauteil zu einem anderen Bauteil transportiert und an dieses angefügt werden soll. Um den Bediener hierbei zu entlasten, sind die Balancier-Hebezeuge entwickelt worden.

Des Weiteren ist aus der Offenlegungsschrift US 2005/0267638 A1 ein Steuerungssystem für flurfreie Förderer im Bereich von Montagelinien bekannt. Das Steuerungssystem ist konfigurierbar, um die flurfreien Förderer in Form von Kranen und Balancier-Hebezeugen, insbesondere deren Verfahrwege, an die einzelnen Montageaufgaben anzupassen. Es können halb-automatische Bewegungen vorgesehen werden oder beispielsweise kann der flurfreie Förderer automatisch zu einer Ausgangsposition zurückkehren. In Bezug auf die eingesetzten Balancier-Hebezeuge ist vorgesehen, deren Ansprechverhalten an die Benutzer anzupassen. Hierfür können zu dem Balancier-Hebezeug maximale Hub- und Senkgeschwindigkeiten, maximale Hub- und Senkbeschleunigungen, maximale und minimale Hubhöhen und die Ansprechempfindlichkeit des Balancier-Hebezeuges eingestellt werden. Im Bereich eines Handgriffs des Balancier-Hebezeuges sind dafür eine entsprechende Anzeige und verschiedene Bedienschalter vorgesehen. Auch können in diesem Steuerungssystem bestimmte Bereiche definiert werden, in denen die flurfreien Förderer nicht einfahren können, um Kollisionen mit beispielsweise Gebäudeteilen oder Maschinen zu verhindern.

Aus der europäischen Patentanmeldung EP 2 177 307 A1 ist ein Balancier-Hebezeug bekannt, das während der Montage von Kraftfahrzeugen als eine Art Assistenz-Vorrichtung beim Einbau von Scheiben in Kraftfahrzeuge dient. Das Balancier-Hebezeug umfasst einen gelenkigen Roboter-Arm, dessen Antriebsmotoren sowie eine Bremse über eine Steuerung angesteuert werden. Die Scheibe ist über einen Sauggreifer aufnehmbar und von einem Bediener mittels des Balancier-Hebezeuges in die Einbauposition bewegbar. Hierzu ist an dem Sauggreifer über einen Sensor ein Griff angeordnet. Über die Steuerung wird der Bediener des Balancier-Hebezeuges dahingehend unterstützt, dass in drei aufeinanderfolgenden Abschnitten des Montagevorgangs jeweils ein Betriebsmodus aktiv ist, in dem der Bediener über das Balancier-Hebezeug zunächst keine, dann beschränkte und abschließend volle Kontrolle hat. In dem ersten Betriebsmodus wird die Scheibe selbsttätig entlang einer programmierten, vertikalen Wegstrecke bewegt. Hierbei hat der Bediener keine Kontrolle über das Balancier-Hebezeug, da sämtliche Krafteinleitungen des Bedieners von der Bremse unterdrückt werden beziehungsweise von dem Sensor detektierte Signale nicht an die Antriebsmotoren übermittelt werden. In dem zweiten Betriebsmodus hat der Bediener über seinen Griff nur Einfluss auf eine Translationsbewegung in der horizontalen X-Richtung. Hierbei wird in Antwort auf eine Kraft des Bedieners, die von dem Sensor detektiert und an die Steuerung übermittelt wird, die Bewegung in X-Richtung von den Antriebsmotoren unterstützt. Analog zu dem ersten Betriebsmodus werden die übrigen Bewegungen selbsttätig von dem Balancier-Hebezeug übernommen beziehungsweise entsprechende Krafteinleitungen des Bedieners unterdrückt. In dem dritten Betriebsmodus hat der Bediener die vollständige Kontrolle über das Balancier-Hebezeug und kann mit der üblichen Unterstützung durch das Balancier-Hebezeug und dessen Antriebsmotoren aufgrund seiner Erfahrung die Scheibe in dem Kraftfahrzeug platzieren. Hierbei unterstützt das Balancier-Hebezeug die Lastbewegung in Antwort auf eine Kraft des Bedieners in jeder der Raumrichtungen X, Y und Z.

Vor diesem Hintergrund ist es Aufgabe der vorliegenden Erfindung, eine einfachere Handhabung einer Last mit einem Balancier-Hebezeug, insbesondere beim Anheben, Entfernen oder Anfügen einer Last, zu erreichen.

Die Aufgabe wird gelöst durch ein Steuerverfahren nach Anspruch 1 sowie durch ein Balancier-Hebezeug nach Anspruch 17. Vorteilhafte Ausgestaltungen des Steuerverfahrens sind in den Ansprüchen 2 bis 16 angegeben.

Erfindungsgemäß wird bei einem Steuerverfahren für ein Balancier-Hebezeug, das einen über eine Steuerung ansteuerbaren Hubmotor umfasst, der über einen Steuergriff mit einem Kraftsensor ein Lastaufnahmemittel hebt und senkt, in dem in einem Betriebsmodus "Balancieren" über die Steuerung das Lastaufnahmemittel mit oder ohne einer aufgenommenen Last in Antwort auf eine Kraft eines Bedieners angehoben beziehungsweise abgesenkt wird, eine einfachere Handhabung einer Last mit einem Balancier-Hebezeug, insbesondere beim Anheben, Entfernen oder Anfügen einer Last von oder an ein anderes Bauteil, dadurch erreicht, dass ein Betriebsmodus "Aufnehmen" oder ein Betriebsmodus "Fügen" ausgewählt wird, in dem das Lastaufnahmemittel selbsttätig ohne Einfluss der Kraft eines Bedieners von der Steuerung in Hub- oder Senkrichtung in Abhängigkeit von den von dem Kraftsensor ermittelten Signalen bewegt wird. Durch die wenigstens teilweise selbsttätige Bewegung des Lastaufnahmemittels wird dem Bediener zumindest teilweise die Schwierigkeit abgenommen, die Bewegungsgeschwindigkeit des Lastaufnahmemittels einzustellen. Der Bediener kann sich somit auf Korrekturen der Bewegungen in der horizontalen Richtung konzentrieren oder er ist zeitweise vollständig von der Kontrolle der vertikalen Bewegung entbunden. Der Begriff "selbsttätig" ist in diesem Zusammenhang somit als eine Art automatische Hub- und/oder Senkbewegung zu verstehen, bei der der Bediener weder den Steuergriff noch die Last und/oder das Lastaufnahmemittel berührt und die Steuerung des Balancier-Hebezeuges eine gewünschte Position automatisch anfährt. Durch die selbsttätige Bewegung lassen sich Geschwindigkeit und gegebenenfalls auftretende Kontaktkräfte besser beherrschen. Die Bewegung des Lastaufnahmemittels ist somit in dem Betriebsmodus "Aufnehmen" oder dem Betriebsmodus "Fügen" zumindest teilweise der Einwirkung des Bedieners entzogen. "Selbsttätig" bedeutet hierbei, dass diese Bewegung auch dann stattfindet, wenn keine Bedienerkraft einwirkt. Die Geschwindigkeit der Bewegung ist dabei nicht proportional zu der Bedienerkraft. Die Geschwindigkeit ist vorgegeben und typischerweise konstant. Es besteht allerdings die Möglichkeit, sowohl die Kraft als auch die Geschwindigkeit während des Ausgleichsvorganges zu parametrieren. Der Betriebsmodus "Fügen" umfasst die beiden Betriebsmodi "Fügen I" und "Fügen II".

Der Begriff "Kraft eines Bedieners" bezieht sich in diesem Zusammenhang vornehmlich auf Kräfte die vom Bediener ausgeübt werden, allerdings selbstverständlich auch auf Kräfte, die zum Beispiel von anderen Objekten herrühren, die das Balancer-Hebezeug allerdings nicht von einer Kraft des Bedieners unterscheiden kann. Von anderen Objekten herrührende Kräfte entstehen beispielsweise, wenn die Last an anderen Gegenständen anschlägt, aufsetzt oder unterhakt. Die "Kraft eines Bedieners" entspricht somit einer auf den Kraftsensor wirkenden externen Kraft.

In einer bevorzugten Betriebsweise des Steuerverfahrens kann vorgesehen sein, dass von der Steuerung die Kraft nicht verarbeitet wird, die sonst im Betriebsmodus "Balancieren" die selbsttätige Bewegung in Hub- oder Senkrichtung bewirkt. Diese Betriebsweise erfolgt vorteilhafter Weise zusammen mit den Betriebsmodi "Fügen II" und "Aufnehmen". Der Bediener kann sich somit auf Korrekturen der Bewegungen in der horizontalen Richtung konzentrieren und/oder er ist vollständig von der Kontrolle der vertikalen Bewegung entbunden.

Besonders vorteilhaft ist, dass in dem Betriebsmodus "Aufnehmen" von der Steuerung der Hubmotor in der Weise angesteuert wird, dass das Lastaufnahmemittel solange angehoben wird, bis von dem Kraftsensor eine Kraft gemessen wird, die einen vorgewählten Grenzwert überschreitet, und anschließend von der Steuerung in einem Betriebsmodus "Halten" gewechselt wird, in dem das Lastaufnahmemittel stationär gehalten wird. Nachdem der Grenzwert erreicht worden ist und das Lastaufnahmemittel stationär gehalten wird, kann ein Bediener beispielsweise eine Spannvorrichtung lösen, in der die Last gehalten ist und die frei werdende Last wird sicher aufgenommen. Anschließend kann entweder in den Betriebsmodus "Balancieren" oder in den Betriebsmodus "Auf-/Ab-Steuerung" zurück gewechselt werden oder der Betriebsmodus "Halten" beibehalten werden, bei dem keine vertikalen Bewegungen der Last möglich sind und in dem eine horizontale Bewegung mittels eines Schwenkarms oder eines Bewegens des Balancier-Hebezeuges entlang einer Laufschiene erfolgen kann. Durch diesen Betriebsmodus "Aufnehmen" kann insbesondere bei der Aufnahme eines eingespannten Werkstücks sichergestellt werden, dass die Haltekraft des Balancier-Hebezeugs einerseits groß genug ist, um eine sichere Aufnahme des Werkstücks zu gewährleisten und andererseits klein genug, um das Risiko eines Verkantens oder Abrutschens zu minimieren. Besonders bevorzugt ist, dass in dem Betriebsmodus "Aufnehmen" in der Steuerung der Grenzwert voreingestellt wird. Der Grenzwert kann je nach Art der Last beziehungsweise des Werkstücks sowie gegebenenfalls in Abhängigkeit von der Art des Lastaufnahmemittels unterschiedliche Werte haben. Er wird hierbei geeigneter Weise möglichst niedrig gewählt aber gerade groß genug, dass eine sichere Aufnahme der Last gewährleistet ist. Vorzugsweise kann der Grenzwert im Bereich von 10N bis 100N voreingestellt werden.

Um für bestimmte Handhabungsaufgaben die Last zu führen, ohne dass diese auf Grund der aufgebrachten Handkraft angehoben oder abgesenkt wird, ist ein Betriebsmodus "Halten" vorgesehen, in dem von der Steuerung eine auf das Lastaufnahmemittel wirkende Bremse betätigt wird.

In einem vorteilhaften Betriebsmodus "Fügen I" ist vorgesehen, dass von der Steuerung der Hubmotor in der Weise angesteuert wird, dass von der Steuerung das Lastaufnahmemittel in einem Austariervorgang selbsttätig angehoben und abgesenkt wird, solange bis von dem Kraftsensor eine zuvor in Bezug auf die Last, das Lastaufnahmemittel und/oder den Steuergriff austarierte Kraft gemessen wird. Ein solcher Betriebsmodus "Fügen I" wird zum Anfügen einer Last an ein anderes Werkstück verwendet. Hierbei besteht sonst die besondere Gefahr, dass ein Aufsetzen der Last auf das andere Werkstück fälschlich als nach oben wirkende Bedienerkraft interpretiert wird, was zu einem ungewollten Anheben der Last führen würde. Daher werden in diesem Betriebsmodus "Fügen I" von unten und oben einwirkende Kräfte, die von Handkräften des Bedieners oder wie vorbeschrieben im Zusammenhang mit der Lasthandhabung entstehen, im Rahmen des Austariervorgangs verarbeitet bis zum Erreichen der austarierten Kraft. Dabei kann der Bediener die Fügebewegung fortsetzen oder die Hände von der Last und dem Lastaufnahmemittel lösen, um nach Erreichen des austarierten Zustandes hiervon ausgehend zunächst verkantungsfrei den Fügevorgang fortzusetzen. In dieser Betriebsart kann die Last nahezu schwebend auf einen Stab aufgefügt werden.

Hierdurch ergibt sich vorteilhafter Weise, dass bei einer zur der austarierten Kraft gemessenen größeren Kraft das Lastaufnahmemittel abgesenkt wird und bei einer zur der austarierten Kraft gemessenen kleineren Kraft das Lastaufnahmemittel angehoben wird.

Vorteilhafter Weise kann vorgesehen sein, dass in dem Betriebsmodus "Fügen I" von der Steuerung die von dem Bediener aufgebrachte Kraft gegenüber dem Betriebsmodus "Balancieren" mit einer erhöhten Empfindlichkeit überwacht wird und somit die von dem Bediener aufgebrachte Kraft in Richtung auf eine geringere Geschwindigkeit zum Anheben und Senken des Lastaufnahmemittels ausgewertet wird. Dies gilt auch für die Störkräfte während der Handhabung. Dieses Erhöhen der Empfindlichkeit entspricht einem Reduzieren der Dynamik, das in diesem Zusammenhang dahingehend verstanden wird, dass gegenüber dem Betriebsmodus "Balancieren" die Dynamik verkleinert wird. Ausgehend von einer üblichen maximalen Hebe- und Senkgeschwindigkeit im Bereich von 10m/min bis 30m/min im Betriebsmodus "Balancieren" bezogen auf eine maximale ausgewertete Handkraft von zum Beispiel 30N wird durch die Dynamikreduzierung die maximale Hebe- und Senkgeschwindigkeit auf einen Bereich von 5m/min im Betriebsmodus "Balancieren" bezogen auf eine maximale ausgewertete Handkraft von 30N geändert. Vorzugsweise wird die Dynamik halbiert. Hierbei, d.h. in den Betriebsmodi "Fügen I" und "Balancieren", ist in üblicher Weise weiterhin die aufgebrachte Handkraft proportional zu der hieraus bestimmten Hub- oder Senkgeschwindigkeit.

Bevorzugt ist vorgesehen, dass in dem Betriebsmodus "Fügen I" in der Steuerung die Geschwindigkeit zum Anheben und Absenken des Lastaufnahmemittels im Bereich von 2 mm/s bis 8 mm/s eingestellt beziehungsweise begrenzt wird. Durch diese begrenzte Bewegungsgeschwindigkeit werden dem Bediener ausreichende Reaktionszeiten gegeben, um auf die Bewegungen des Lastaufnahmemittels zu reagieren. Diese geringen Geschwindigkeiten ermöglichen eine besonders exakte Überwachung der auftretenden Kraft auch dann, wenn elektronisch oder mechanisch bedingte Verzögerungen bei deren Ermittlung auftreten.

Besonders vorteilhaft kann in dem Betriebsmodus "Fügen I" vorgesehen werden, dass von der Steuerung ein Anstoßen, Aufsetzen, Hängenbleiben beziehungsweise Verkanten der Last, wodurch sogenannte Störkräfte hervor gerufen werden, über eine sogenannte Differentialüberwachung festgestellt wird, in der bestimmte zeitliche Differentiale der von dem Kraftsensor gemessenen Kraft mit einem Grenzwert verglichen werden und bei Überschreiten des Grenzwertes innerhalb des Betriebsmodus "Fügen I" der Austariervorgang gestartet wird. Ein Überschreiten des Grenzwertes führt somit nicht zu einem Umschalten in den Betriebsmodus "Halten" sondern zu einer automatischen Austarierung der Last, so dass der Bediener seine Handhabungstätigkeit fortführen kann. Gegenüber dem Betriebsmodus "Balancieren" beträgt bei dem Betriebsmodus "Fügen I" der für die Differentialüberwachung festgelegte Grenzwert nur etwa 30%. Beispielsweise beträgt bei dem Betriebsmodus "Balancieren" der Grenzwert bei einer Lastkraft von 1000N etwa 200N/50ms und bei dem Betriebsmodus "Fügen I" etwa 66N/50ms. Der Bediener hat die Möglichkeit die Steuerung den Austariervorgang abschließen zu lassen oder durch gezielte Handkräfte zu beeinflussen, da der modifizierte Balancierbetrieb innerhalb des Betriebsmodus "Fügen I" weiterhin aktiv ist.

In einem vorteilhaften weiteren Betriebsmodus "Fügen II" ist vorgesehen, dass von der Steuerung der Hubmotor in der Weise angesteuert wird, dass das Lastaufnahmemittel angehoben wird, solange keine von einem Bediener auf die Last, das Lastaufnahmemittel und/oder den Steuergriff aufgebrachte Kraft nach unten wirkt, und dass das Lastaufnahmemittel abgesenkt wird, wenn eine von einem Bediener auf die Last, das Lastaufnahmemittel und/oder den Steuergriff aufgebrachte Kraft nach unten wirkt. Ein solcher Betriebsmodus "Fügen II" wird zum Anfügen einer Last an ein anderes Werkstück verwendet. Hier besteht sonst eine besondere Gefahr darin, dass ein Aufsetzen der Last auf das andere Werkstück fälschlich als nach oben wirkende Bedienerkraft interpretiert wird, was zu einem ungewollten Anheben der Last führt. Daher werden in diesem Betriebsmodus "Fügen II" von unten einwirkende Kräfte ignoriert und stattdessen die Last mit einer Art "Auftrieb" konstant nach oben bewegt, solange der Bediener nicht mit einer nach unten gerichteten Kraft einwirkt. Somit kann der Bediener die Fügeaufgabe einfacher lösen, da sein Eingreifen auf die nach unten wirkende Handkraft reduziert wird.

In einer vorteilhaften Ausgestaltung wird in dem Betriebsmodus "Fügen II" von der Steuerung die von dem Bediener aufgebrachte Kraft gegenüber dem Betriebsmodus "Balancieren" mit einer erhöhten Empfindlichkeit überwacht und somit die von dem Bediener aufgebrachte Kraft in Richtung auf eine geringere Geschwindigkeit zum Anheben und Senken des Lastaufnahmemittels ausgewertet. Die Erfüllung der Handhabungsaufgabe durch den Bediener kann dadurch erleichtert werden, da dann bereits kleinere Messwertänderungen des Kraftsensors als Änderung der Bedienerkraft ausgewertet werden.

In einer bevorzugten Ausgestaltung ist vorgesehen, dass in den Betriebsmodi "Fügen I" und "Fügen II" von der Steuerung eine Häufigkeit von Richtungswechseln der Bewegung des Lastaufnahmemittels überwacht wird und eine Geschwindigkeit des Anhebens und/oder Absenkens Lastaufnahmemittels reduziert wird und/oder in den Betriebsmodus "Halten" umgeschaltet wird, wenn die Häufigkeit einen vorgewählten Grenzwert überschreitet. In Fällen, in denen das Anfügen der Last an ein anderes Objekt kompliziert ist beziehungsweise in der Endphase des Anfügeprozesses können viele Bewegungskorrekturen auf engem Raum notwendig sein. Bei dieser bevorzugten Ausgestaltung können die Wechsel der Bewegungsrichtung zeitlich registriert werden und deren Anzahl in einem gewissen Zeitraum, zum Beispiel den letzten 20 Sekunden, als Maß für die aktuelle Häufigkeit verwendet werden. Wird hierbei einen Grenzwert - zum Beispiel 8 Änderungen innerhalb von 20 s - überschritten, wird dies als Anzeichen dafür gewertet, dass der Fügeprozess vom Bediener ein zu häufiges Eingreifen erfordert. Hierauf hin wird die Geschwindigkeit, mit der das Lastaufnahmemittel abgesenkt und/oder angehoben wird, verringert, wodurch dem Bediener mehr Zeit zum Eingreifen bleibt und der Fügevorgang insgesamt ruhiger wird.

Bevorzugt ist vorgesehen, dass in dem Betriebsmodus "Aufnehmen" und in dem Betriebsmodus "Fügen II" in der Steuerung die Geschwindigkeit zum Anheben des Lastaufnahmemittels im Bereich von 2 mm/s bis 10 mm/s eingestellt wird. Durch diese begrenzte Bewegungsgeschwindigkeit werden dem Bediener ausreichende Reaktionszeiten gegeben, um auf die Bewegungen des Lastaufnahmemittels zu reagieren. Diese geringen Geschwindigkeiten ermöglichen eine besonders exakte Überwachung der auftretenden Kraft auch dann, wenn elektronisch oder mechanisch bedingte Verzögerungen bei deren Ermittlung auftreten.

In vorteilhafter Weise kann in einem Betriebsmodus "Wiegen" von der Steuerung eine auf den Kraftsensor wirkende Lastkraft gemessen werden. Aus dieser Lastkraft kann von der Steuerung das Gewicht bestimmt werden, da in einem vorhergehenden Schritt das Gewicht des Lastaufnahmemittels und des entsprechenden Teil des Steuergriffs ermittelt wurden. Der Steuerung kann dann für die Betriebsmodi "Balancieren", "Fügen I" und "Fügen II" aus dem Signal des Kraftsensors eine Handkraft oder eine Störkraft ermitteln, da die Lastkraft im Sinne einer Tarakraft nun bekannt ist, die weiterhin am Kraftsensor anliegt.

Bevorzugter Weise kann der Betriebsmodus "Wiegen" von der Steuerung gestartet werden, wenn die Hand eines Bedieners von dem Steuergriff gelöst wird. Hierfür ist ein entsprechender Sensor zur Erkennung der Hand am Steuergriff angeordnet. In einem ersten Schritt wird dann eine noch gegebenenfalls vorhandene Bewegung des Balancier-Hebezeugs gestoppt, d.h. die Sollgeschwindigkeit des Balancier-Hebezeugs auf null geregelt.

Erfindungsgemäß wird auch durch ein Balancier-Hebezeug eine einfachere Handhabung einer Last mit einem Balancier-Hebezeug, insbesondere beim Anheben, Entfernen oder Anfügen einer Last von oder an ein anderes Bauteil dadurch erreicht, dass ein über eine Steuerung ansteuerbarer Hubmotor, der über einen Steuergriff mit einem Kraftsensor ein Lastaufnahmemittel hebt und senkt, mit dem vorbeschriebenen Steuerverfahren arbeitet.

Ein Ausführungsbeispiel der Erfindung wird nachfolgend mit Bezugnahme auf die Figuren erläutert. Hierbei zeigen:
Figur 1 eine schematische Darstellung eines erfindungsgemäßen Balancier-Hebezeugs mit einer daran aufgehängten Last;
Figur 2 ein schematisches Schaltbild des Balancier-Hebezeugs gemäß Figur 1,
Figur 3a eine schematische Darstellung eines Werkstücks in einer Spannvorrichtung vor der Aufnahme durch ein Balancier-Hebezeug und
Figur 3b eine schematische Darstellung eines mit einem Balancier-Hebezeug geführten Werkstücks vor dem Anfügen an ein anderes Werkstück.

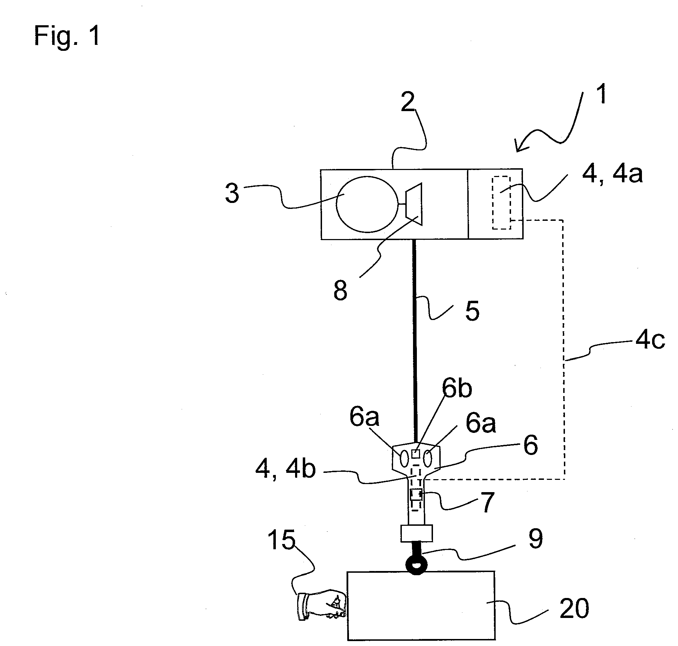

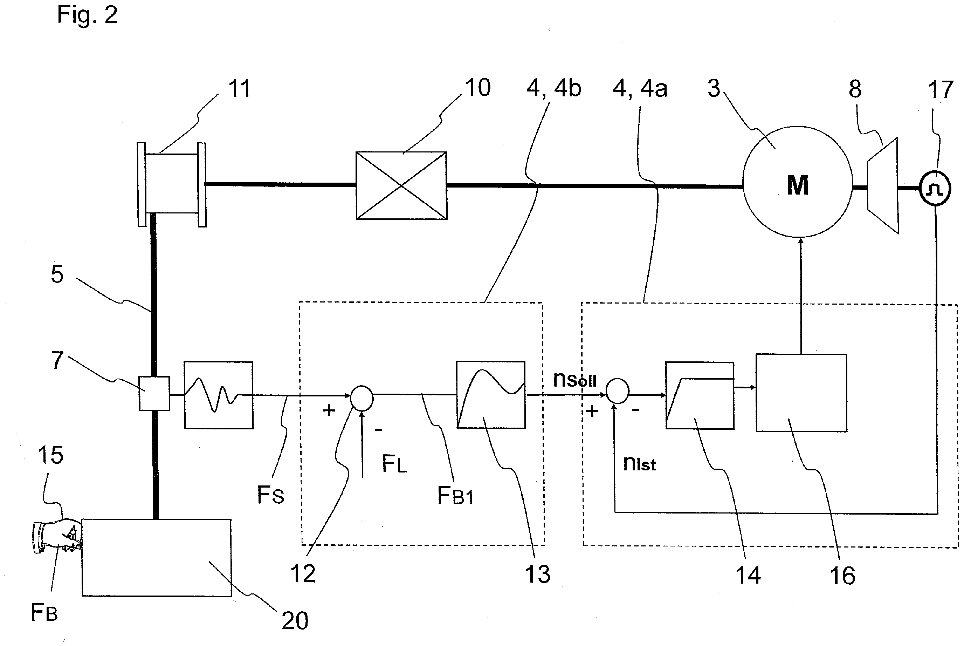

In der Figur 1 ist stark vereinfacht ein erfindungsgemäßes Balancier-Hebezeug 1 dargestellt. Hierbei sind in einem Gehäuse 2 ein Hubmotor 3 und eine Gehäuse-Steuerung 4a angeordnet, die ein Teil einer gesamten Steuerung 4 für das Balancier-Hebezeug 1 ist. Das Gehäuse 2 ist in üblicher Weise an einer nicht dargestellten Tragkonstruktion ortsfest oder einem entlang einer Schiene verfahrbaren Fahrwerk aufgehängt. Der Hubmotor 3 treibt über ein Getriebe eine Trommel 11 an (siehe Figur 2), von der ein als biegeschlaffes Tragmittel dienendes Seil 5 zum Heben und Senken einer Last 20 auf- beziehungsweise abwickelbar ist. Ein Einsatz von textilen Bändern oder Ketten ist auch denkbar. Der Hubmotor 3 ist vorzugsweise als elektrischer Hubmotor ausgebildet; er kann aber auch ein Pneumatik-/ oder Hydraulikmotor sein. Eine Teillänge des Seils 5 ist abgewickelt und hängt nach unten aus dem Gehäuse 2 heraus. An einem unteren, lastseitigen Ende des Seils 5 ist ein Steuergriff 6 mit verschiedenen Bedienelementen 6a angeordnet. Der Steuergriff 6 ist T-förmig ausgebildet und hat einen zylinderförmigen Griffbereich zum Handhaben der Last 20 und einen sich nach oben T-förmig verbreiternden Bedienbereich für die Aufnahme der Bedienelemente 6a, die von einem Daumen eines Bedieners leicht erreichbar sind. Über die Bedienelemente 6a kann der Bediener zwischen verschiedenen Betriebsmodi des Balancier-Hebezeug 1 auswählen und auch das Balancier-Hebezeug 1 in einem Betriebsmodus "Auf-/ und Absteuerung" manuell steuern. Auch ist im Bedienbereich ein Anzeige 6b angeordnet, auf der der jeweilige Betriebsmodus, Statusmeldungen und etwaige Störungszustände angezeigt werden. Auch ist in dem Steuergriff 6 eine Griff-Steuerung 4b, die ein weiterer Teil der gesamten Steuerung 4 für das Balancier-Hebezeug 1 ist. Die Griff-Steuerung 6 ist über eine nicht dargestellte, gegebenenfalls drahtlose Verbindung 4c mit der Steuerung 4 verbunden. Am unteren Ende des Steuergriffs 6 ist ein Lastaufnahmemittel 9 befestigt, an dem eine Last 20 angeschlagen ist. Das Lastaufnahmemittel 9 ist im vorliegenden Fall als Haken ausgebildet, kann aber auch eine Öse oder ein Greifer sein. Die Anbindung des Lastaufnahmemittels 9 an den Steuergriff 6 ist als Kupplung ausgebildet, um einen leichten Wechsel des Lastaufnahmemittels 9 zu ermöglichen.

Im Innern des Steuergriffs 6 befindet sich neben der Griff-Steuerung 4b ein Kraftsensor 7, der eine zwischen dem Seil 5 und dem Lastaufnahmemittel 9 wirkende Kraft misst.

Ein Bediener, dessen Hand 15 schematisch dargestellt ist, kann in einem ersten und als "Auf-/Absteuerung" bezeichneten Betriebsmodus die Last 20 mittels des Steuergriffs 6 in Hub- und Senkrichtung führen. Hierfür kann der Bediener die in dem Steuergriff 6 angeordneten Bedienelemente 6a verwenden. Alternativ kann in dem Steuergriff 6 ein weiterer nicht dargestellter Kraftsensor angeordnet sein, der den Steuergriff 6 am Seil 5 oder Lastaufnahmemittel 9 abstützt. Über diesen Kraftsensor können dann nach oben oder unten gerichtete Steuerkräfte des Bedieners am Steuergriff 6 ermittelt werden, die dann von der Steuerung 4 in Befehle zum Heben oder Senken der Lastaufnahmemittels 9 umgesetzt werden. Sobald der Bediener den Steuergriff 6 ergreift, wird in den Betriebsmodus "Auf-/Absteuerung" umgeschaltet. Hierfür kann ein entsprechender Sensor an den Steuergriff 6 vorgesehen sein, der die Anwesenheit der Bedienerhand erkennt.

In einem weiteren und als "Balancieren" bezeichneten Betriebsmodus kann der Bediener ein Heben und Senken der Last 20 durch direktes Einwirken auf die Last 20 oder das Lastaufnahmemittel 9 ein Heben oder Senken der Last 20 bewirken. Hierbei werden Kräfte, die der Bediener auf die Last 20 ausübt, in Steuerbefehle für den Hubmotor 3 übersetzt, so dass die Last 20 in die Richtung bewegt wird, die der Richtung der Krafteinwirkung des Bedieners entspricht. Hierbei empfindet der Bediener das Heben oder Senken der Last 20 als quasi schwerelos. Im Betriebsmodus "Balancieren" ermittelt die Griff-Steuerung 4b die Bedienerkraft durch Subtraktion der Gewichtskraft von Lastaufnahmemittel 9, Last 20 und Steuergriff 6 von der Kraft, die der Kraftsensor 7 registriert. Hieraus werden Steuerparameter für den Hubmotor 3 ermittelt. Solange die Last 20 frei auf und ab bewegt wird, stellt der Balanciermodus eine ideale Betriebsart dar. Bei einem Anstoßen, Aufsetzen, Hängenbleiben beziehungsweise Verkanten der Last 20 wird das Balancier-Hebezeug 1 mittels der Steuerung 4 über eine sogenannte Differentialüberwachung geschützt. Im Rahmen der Differentialüberwachung überwacht die Steuerung 4 die Änderung der gemessen Kraft über der Zeit. Überschreit dieses Differential einen zuvor festgelegten und in der Steuerung 4 hinterlegten Grenzwert, wechselt die Steuerung 4 automatisch von dem Betriebsmodus "Balancieren" in den Betriebsmodus "Halten". Beispielsweise beträgt bei dem Betriebsmodus "Balancieren" der Grenzwert bei einer Lastkraft von 1000N etwa 200N/50ms. Die Zeit von 50ms entspricht einem Regelzyklus. Ausgehend von dem nun erreichten Betriebsmodus "Halten" hat der Bediener nun die Möglichkeit bei einer anstehenden Handhabungsaufgabe zwischen den Betriebsmodi "Aufnehmen", "Fügen I" und "Fügen II" zu wählen.

In dem als "Halten" bezeichneten Betriebsmodus kommt eine in dem Gehäuse 2 angeordnete Bremse 8 zum Einsatz. Die Last 20 wird in der angefahrenen Höhe gehalten und der Bediener kann beispielsweise die am Balancier-Hebezeug hängende Last 20 unmittelbar oder durch Anfassen an dem Lastaufnahmemittel 9 führen, ohne dass die auf die Last 20 ausgeübten Kräfte zu einem Anheben oder Absenken der Last 20 führen. Hierbei wird also die freie Länge des Seils 5 konstant gehalten, auch wenn der Bediener Kräfte entlang des Seils 5 ausübt. Dieser Betriebsmodus kann zum Einsatz kommen, wenn das Balancier-Hebezeug 1 an einen Fahrwerk aufgehängt ist, das an manuell entlang einer Schiene verfahrbar ist. Der Bediener kann somit die Last 20 entlang der Schiene ziehen. Anstatt der Schiene kann auch ein Schwenkarm vorgesehen sein.

Auch gibt es einem Betriebsmodus "Wiegen", um in den anderen Betriebsmodi "Balancieren", "Fügen I" und "Fügen II" der Steuerung 4 die Möglichkeit zu geben, aus dem Signal des Kraftsensors 7 eine Handkraft oder eine Störkraft zu ermitteln. In dem Betriebsmodus "Wiegen" wird von der Steuerung 4 aus dem Signal des Kraftsensors 7 eine Lastkraft im Sinne einer Tarakraft ermittelt. Hierfür ist erforderlich, dass die Last 20 frei an dem Seil 5 hängt und nicht von einer Hand 15 eines Bedieners oder anderen Störkräften beeinflusst wird. Daher bietet sich an, den Betriebsmodus "Wiegen" automatisch von der Steuerung 4 zu starten, wenn die Hand 15 eines Bedieners von dem Steuergriff 6 gelöst wird. Hierfür ist ein entsprechender Sensor zur Erkennung der Hand 15 am Steuergriff 6 am Steuergriff 6 angeordnet. Zuvor wird dann eine noch gegebenenfalls vorhandene Bewegung des Balancier-Hebezeug 1 gestoppt, d.h. die Sollgeschwindigkeit des Balancier-Hebezeugs auf null geregelt. Aus der gemessenen Lastkraft kann von der Steuerung 4 dann das Gewicht der Last 20 bestimmt werden, da in einem vorhergehenden Schritt mit dem Betriebsmodus "Wiegen" das Gewicht des aktuell verwendeten Lastaufnahmemittels 9 und des entsprechenden Teil des Steuergriffs 6 ermittelt wurden. Die für die Steuerung 4 relevante Lastkraft oder Tarakraft beinhaltet die Gewichtskräfte des aktuell verwendeten Lastaufnahmemittels 9 und des entsprechenden Teil des Steuergriffs 6.

In der Figur 2 ist ein schematisches Schaltbild des Balancier-Hebezeugs 1 gemäß Figur 1 dargestellt. Zusätzlich zur Figur 1 ist dargestellt, dass der Hubmotor 3 mit der Bremse 8 über ein Getriebe 10 eine Seiltrommel 11 antreibt. Mit der Seiltrommel 11 wird das Seil 5 zum Heben und Senken der Last 20 auf- und abgewickelt. Zwischen der Seiltrommel 11 und der Last 20 ist der Kraftsensor 7 angeordnet, über den die Kraft FS in dem Seil 5 gemessen wird. Für den Fall, dass nur eine Last 20 an dem Seil 5 hängt und keine Bedienerkraft FB an der Last 20, den Steuergriff 6 oder dem Lastaufnahmemittel 9 angreift, entspricht die von dem Kraftsensor 7 gemessene Seilkraft FS der Lastkraft FL der an dem Seil 5 hängenden Last 20. Die Lastkraft FL ergibt sich in üblicher Weise aus der Masse m der Last 20 multipliziert mit der Erdbeschleunigung g. Die Lastkraft FL kann bekannt sein und manuell der Steuerung 4 zugeführt werden oder in einem Betriebsmodus "Wiegen" bei frei an dem Seil 5 hängender Last 20 bestimmt werden. Für den Fall, dass zusätzlich zu der Last 20 an dem Seil 5 noch eine Bedienerkraft FB angreift, entspricht die von dem Kraftsensor 7 gemessene Seilkraft FS der Summe aus Lastkraft FL und Bedienerkraft FB sowie etwaiger Störkräfte FE. Aus der Differenz der Seilkraft FS und der Lastkraft FL wird in einem Summationssglied 12 ein Kraftbetrag FB1 ermittelt, der nahezu der Bedienerkraft FB entspricht jedoch noch etwaige Störkräfte FE enthält. In einem Filter 13 wird aus dem errechneten Kraftbetrag FB1 eine Solldrehzahl nsoll als Steuergröße für einen Drehzahlregler 14 bestimmt. Der Filter 13 ist als Tiefpassfilter 2. Ordnung ausgebildet, dessen Knickfrequenz an Hand der im Betriebsmodus "Wiegen" ermittelten Tarakraft eingestellt wird. Der als PI-Regler ausgebildete Drehzahlregler 14 steuert über einen Frequenzumrichter 16 den Hubmotor 3 an, über den dann das durch die aufgebrachte Bedienerkraft FB gewünschte Heben oder Senken der Last 20 ausgeführt wird. Der Drehzahlregler 14 arbeitet in einem geschlossenen Regelkreis, so dass dem Hubmotor 3 ein Drehzahlsensor 17 zugeordnet ist, dessen Drehzahl-Messsignal nist als Ist-Größe dem Drehzahlregler 14 zugeführt wird.

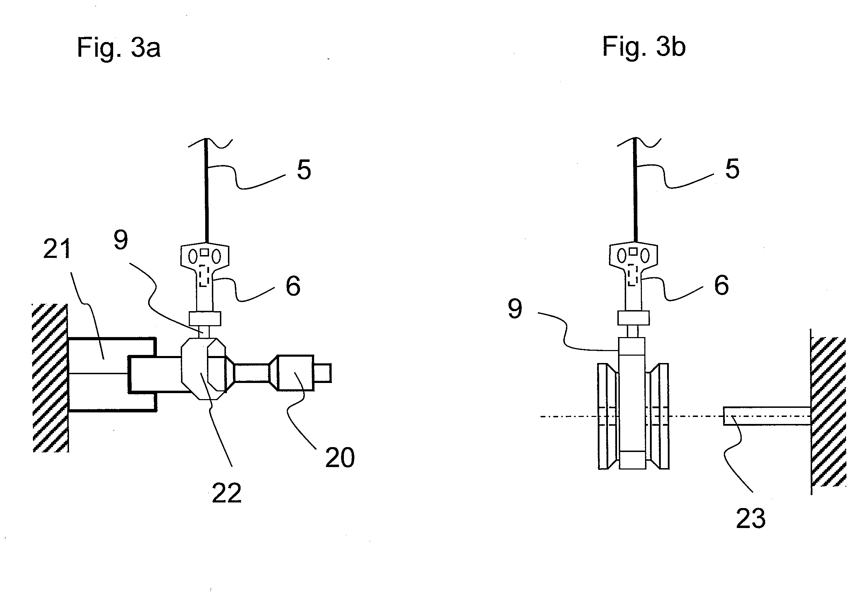

In den Figuren 3a und 3b sind Betriebs-Situationen dargestellt, in denen weder der Betriebsmodus "Balancieren" noch der Betriebsmodus "Halten" ideal ist.

In der Figur 3a ist eine Last 20 in Form eines Werkstücks dargestellt, das in einer Spannvorrichtung 21 einer Drehbank eingespannt ist. Das Werkstück 20 soll mit Hilfe des Balancier-Hebezeugs 1 aus der Spannvorrichtung 21 entnommen werden. Hierfür wird das Werkstück 20 von einem schlaufenförmigen Anschlagmittel 22, das an dem Lastaufnahmemittel 9 aufgehängt ist, im Bereich seines Schwerpunkts umschlungen. Dann wird in üblicher Weise im Betriebsmodus "Balancieren" durch eine Handkraft induziert das Anschlagmittel 22 gespannt. Hierbei ist das Werkstück 20 weiterhin in der Spannvorrichtung 21 gehalten. Im Zusammenhang mit dem Anspannen des Anschlagmittels 22 besteht die Gefahr, dass das Anschlagmittel 22 entweder zu viel oder zu wenig gespannt wird. Für den Fall, dass das Anschlagmittel 22 zu viel gespannt ist, kann es beim Lösen der Spannvorrichtung 21 dazu kommen, dass das Werkstück 20 weiter angehoben wird und in der Spannvorrichtung 21 verkantet. Für den anderen Fall, dass das Anschlagmittel 22 zu wenig gespannt ist, kann es beim Lösen der Spannvorrichtung 21 dazu kommen, dass das Werkstück aus der Spannvorrichtung 21 rutscht und dann erst wieder ruckartig von dem Anschlagmittel 22 abgebremst wird.

Für diesen Betriebsvorgang eines Aufnehmens eines Werkstücks 20 aus einer Spannvorrichtung 21 ist am Steuergriff 6 ein Betriebsmodus "Aufnehmen" wählbar. Nach Aktivieren dieses Betriebsmodus löst der Bediener den Kontakt zu dem Steuergriff 6 und auch einen etwaigen Kontakt zu dem Lastaufnahmemittel 9 und der Last 20 und das Lastaufnahmemittel 9 wird selbsttätig mit einer Geschwindigkeit von beispielsweise 2 mm/s angehoben, bis die vom Kraftsensor 7 registrierte Kraft einen in der Steuerung parametrierten Grenzwert erreicht hat. Typische Grenzwerte liegen bei ca. 10 bis 100N. Die wählbaren Geschwindigkeiten liegen im Bereich von 2 mm/s bis 10 mm/s. Dies dient als Indikator für ein sicheres, aber nicht zu festes Spannen des Anschlagmittels 22 und somit Halten des Werkstücks. Dann wird das Lastaufnahmemittel 9 selbsttätig angehalten und das Balancier-Hebezeug 1 wechselt in den Betriebsmodus "Halten". Der Bediener kann nun die Spannvorrichtung 21 lösen und das Werkstück 20 seitlich herausführen.

Der Betriebsmodus "Aufnehmen" kann allgemein bei Handhabungsaufgaben zum Einsatz kommen, bei dem Werkstücke oder Lasten 20 aus einen gehaltenen beziehungsweise eingespannten Zusatz an das Balancier-Hebezeug 1 übergeben werden, ohne hierbei zunächst auf einem Boden oder einem anderen Gegenstand abgesetzt zu werden.

An Hand der Figur 3b werden nachfolgend weitere Betriebsmodi "Fügen I" und "Fügen II" erläutert. In der Figur 3b ist ein als Greifer ausgebildetes Lastaufnahmemittels 9 dargestellt, von dem eine Last 20 in Form eines Hohlzylinders, Rades oder Rohres angehoben ist. Die Last 20 ist im Bereich ihres Schwerpunkts aufgenommen und ist daher mit seiner Längserstreckung im Wesentlichen waagerecht ausgerichtet. Im vorliegenden Fall besteht die Handhabungsaufgabe darin, die Last 20 auf einen stationären an einer Wand oder einem anderen Bauteil abgestützten Stab 23 aufzusetzen. Der Stab 23 soll symbolisch verstanden werden und als eine Art Platzhalter für jegliche Art von Bauteilen dienen, bei denen vergleichbare Montageaufgaben zu erfüllen sind. Der Stab 23 kann somit beispielsweise eine Achse, ein Dorn oder ein Spannfutter einer Drehbank sein. Da sich der Innendurchmesser des Hohlzylinders und der Außendurchmesser des Stabes 23 nur wenig unterscheiden, besteht bei dieser Handhabungsaufgabe ein großes Risiko, dass sich der Hohlzylinder und der Stab 23 miteinander verkanten, da im Betriebsmodus "Balancieren" ein Aufsetzen der Last 20 auf dem Stab 23 oder ein Hängenbleiben der Last 20 an dem Stab 23 von der Steuerung 4 als Kraft-Signale zum Heben oder Senken ausgewertet werden.

Für derartige Handhabungsaufgaben ist am Steuergriff der Betriebsmodus "Fügen I" oder alternativ "Fügen II" wählbar.

Bei Auswahl des Betriebsmodus "Fügen I" wird in der Steuerung 4 die Empfindlichkeit erhöht und gleichzeitig werden die Laständerungen (Differentiale der Lastmessung) empfindlicher erfasst. Unter Erhöhen der Empfindlichkeit wird in diesem Zusammenhang verstanden, dass gegenüber dem Betriebsmodus "Balancieren" die Dynamik verkleinert wird. Ausgehend von einer üblichen maximalen Hebe- und Senkgeschwindigkeit im Bereich von 10m/min bis 30m/min im Betriebsmodus "Balancieren" bezogen auf eine maximale ausgewertete Handkraft von zum Beispiel 30N wird durch die Dynamikreduzierung die maximale Hebe- und Senkgeschwindigkeit auf einen Bereich von 5m/min im Betriebsmodus "Balancieren" bezogen auf eine maximale ausgewertete Handkraft von 30N geändert. Vorzugsweise wird die Dynamik halbiert. Hierbei, d.h. in den Betriebsmodi "Fügen I" und "Balancieren", ist in üblicher Weise weiterhin die aufgebrachte Handkraft proportional zu der hieraus bestimmten Hub- oder Senkgeschwindigkeit. Außerdem wird zu Beginn des Betriebsmodus "Fügen I" mit dem Betriebsmodus "Wiegen" die Gesamtheit von Last 20, Lastaufnahmemittel 9 und Steuergriff 6 gewogen und das Balancier-Hebezeug 1 austariert, wenn dies bereits nicht schon vorher geschehen ist. Der Steuerung 4 ist somit die Lastkraft FL bekannt und kann somit die Bedienerkraft FB und etwaige Störkräfte bestimmen. Stößt nun die Last 20 während des horizontalen Fügens an den Stab 23 an, so beginnt die Steuerung 4 durch selbsttätige langsame Hub- oder Senkbewegungen das Balancier-Hebezeug 1 wieder austarieren. Ein Anstoßen, Aufsetzen, Hängenbleiben beziehungsweise Verkanten der Last 20 stellt die Steuerung über eine sogenannte Differentialüberwachung fest. Gegenüber dem Betriebsmodus "Balancieren" beträgt bei dem Betriebsmodus "Fügen I" der für die Differentialüberwachung festgelegte Grenzwert nur etwa 30%. Beispielsweise beträgt bei dem Betriebsmodus "Balancieren" der Grenzwert bei einer Lastkraft von 1000N etwa 200N/50ms und bei dem Betriebsmodus "Fügen I" etwa 66N/50ms. Die Zeit von 50ms entspricht einem Regelzyklus. Die Fügegeschwindigkeiten liegen im Betriebsmodus "Fügen I" im Bereich von 2mm/s bis 8mm/s. Wird der Grenzwert überschritten, beginnt automatisch innerhalb des Betriebsmodus "Fügen I" der Austariervorgang. Nun hat der Bediener die Möglichkeit, die Steuerung 4 den Austariervorgang abschließen zu lassen oder durch gezielte Handkräfte zu beeinflussen, da der modifizierte Balancierbetrieb innerhalb des Betriebsmodus "Fügen I" weiterhin aktiv ist. Ob im Zusammenhang mit der begonnenen Austarierung die Steuerung 4 eine Bewegung der Last in Hub- oder Senkrichtung veranlasst, hängt davon ab, ob der Kraftsensor 7 ausgehend von seinem austarierten Zustand eine größere oder kleinere Kraft gegenüber der zuvor austarierten Lastkraft misst. Eine größere gemessene Kraft bedeutet ein Anschlagen an den Dorn 23 von unten und daher wird die Last 20 abgesenkt. Eine kleinere gemessene Kraft führt anderenfalls zu einem Anheben. Dabei kann der Bediener den Fügevorgang durch horizontales Schieben fortsetzen, solange bis die Last 20 wieder anstößt. Durch dieses Verfahren kann eine Last nahezu schwebend auf einen Dorn oder in ein Spannfutter eingefügt werden. Wenn die Last 20 seine Endposition erreicht hat, öffnet beziehungsweise löst der Bediener das Lastaufnahmemittel 9 und schaltet in den Betriebsmodus "Balancieren" oder "Auf-/Absteuerung" um.

In dem Betriebsmodus "Fügen II" werden nach oben gerichtete Kräfte auf das Lastaufnahmemittel 9, die Last 20 und den Steuergriff 6 ignoriert und führen nicht zu einem Anheben der Last 20. Allerdings ist in diesem Betriebsmodus vorgesehen, dass das Lastaufnahmemittel 9 mit einer geringen Geschwindigkeit von 5 mm/s angehoben, d.h. es erfährt eine Art künstlichen "Auftrieb". Des Weiteren wird die Empfindlichkeit, mit der die von Kraftsensor 7 gemessene Kraft registriert wird, erhöht. Wird eine nach unten gerichtete Kraft des Bedieners registriert, wird das Lastaufnahmemittel 9 mit einer konstanten Geschwindigkeit von 5 mm/s abgesenkt. Die wählbaren Geschwindigkeiten liegen im Bereich von 2 mm/s bis 10 mm/s. Darüber hinaus wird überprüft, wie oft Wechsel der Bewegungsrichtung der Lastaufnahmemittels 9 erfolgen. Erfolgen beispielsweise mehr als 20 Wechsel innerhalb von 20 Sekunden, dient dies als Indikator dafür, dass ein zu häufiges Eingreifen des Bedieners notwendig ist. In diesem Fall werden die Geschwindigkeiten für das Heben sowie für das Absenken reduziert, um dem Bediener mehr Reaktionszeit zu geben oder in den Betriebsmodus "Halten" zu wechseln.

In dem Betriebsmodus "Fügen II" kann somit der Bediener allein durch eine nach unten gerichtete Kraft im Zusammenspiel mit dem automatischen Aufrieb das geringe Absenken der Last 20 bewirken, um diese auf den Stab 23 aufschieben zu können und gleichzeitig der Vorteil des Balancier-Hebezeuges 1 erhalten bleibt, dass die Last 20 nahezu schwerelos erscheint.

### Bezugszeichenliste

1 Balancier-Hebezeug
2 Gehäuse
3 Hubmotor
4 Steuerung
4a Gehäuse-Steuerung
4b Griff-Steuerung
4c Datenverbindung
5 Seil
6 Steuergriff
6a Bedienelement
6b Anzeige
7 Kraftsensor
8 Bremse
9 Lastaufnahmemittel
10 Getriebe
11 Seiltrommel
12 Summationsglied
13 Filter
14 Drehzahlregler
15 Hand
16 Frequenzumrichter
17 Drehzahlsensor
20 Last
21 Spannvorrichtung
22 Anschlagmittel
23 Stab
FB Bedienerkraft
FB1 Kraftbetrag
FE Störkraft
FL Lastkraft
FS Seilkraft
nist Ist-Drehzahl
nsoll Soll-Drehzahl

## Patentansprüche

1. Steuerverfahren für ein Balancier-Hebezeug (1), das einen über eine Steuerung (4) ansteuerbaren Hubmotor (3) umfasst, der über einen Steuergriff (6) mit einem Kraftsensor (7) ein Lastaufnahmemittel (9) hebt und senkt, in dem in einem Betriebsmodus "Balancieren" über die Steuerung (4) das Lastaufnahmemittel (9) mit oder ohne einer aufgenommenen Last (20) in Antwort auf eine Kraft eines Bedieners angehoben beziehungsweise abgesenkt wird, **dadurch gekennzeichnet, dass** ein Betriebsmodus "Aufnehmen" oder ein Betriebsmodus "Fügen" ausgewählt wird, in dem das Lastaufnahmemittel (9) selbsttätig ohne Einfluss der Kraft eines Bedieners von der Steuerung (4) in Hub- oder Senkrichtung in Abhängigkeit von den von dem Kraftsensor (7) ermittelten Signalen bewegt wird.

2. Steuerverfahren nach Anspruch 1, **dadurch gekennzeichnet, dass** von der Steuerung (4) eine Kraft nicht verarbeitet wird, die sonst im Betriebsmodus "Balancieren" diese selbsttätige Bewegung bewirkt.

3. Steuerverfahren nach Anspruch 1 oder 2, **dadurch gekennzeichnet, dass** in dem Betriebsmodus "Aufnehmen" von der Steuerung (4) der Hubmotor (3) in der Weise angesteuert wird, dass das Lastaufnahmemittel (9) solange angehoben wird, bis von dem Kraftsensor (7) eine Kraft gemessen wird, die einen vorgewählten Grenzwert überschreitet, und anschließend von der Steuerung (4) in einem Betriebsmodus "Halten" gewechselt wird, in dem das Lastaufnahmemittel (9) stationär gehalten wird.

4. Steuerverfahren nach Anspruch 3, **dadurch gekennzeichnet, dass** in dem Betriebsmodus "Aufnehmen" in der Steuerung (4) der Grenzwert, vorzugsweise im Bereich von 10N bis 100N, voreingestellt wird.

5. Steuerverfahren nach einem der Ansprüche 1 bis 4, **dadurch gekennzeichnet, dass** in einem Betriebsmodus "Halten" von der Steuerung (4) eine auf das Lastaufnahmemittel (9) wirkende Bremse (8) betätigt wird.

6. Steuerverfahren nach Anspruch 1, **dadurch gekennzeichnet, dass** in einem Betriebsmodus "Fügen I" von der Steuerung (4) der Hubmotor (3) in der Weise angesteuert wird, dass von der Steuerung (4) das Lastaufnahmemittel (9) in einem Austariervorgang selbsttätig angehoben und abgesenkt wird, solange bis von dem Kraftsensor (7) eine zuvor in Bezug auf die Last (20), das Lastaufnahmemittel (9) und/oder den Steuergriff (6) austarierte Kraft gemessen wird.

7. Steuerverfahren nach Anspruch 6, **dadurch gekennzeichnet, dass** bei einer zur der austarierten Kraft gemessenen größeren Kraft das Lastaufnahmemittel (9) abgesenkt wird und bei einer zur der austarierten Kraft gemessenen kleineren Kraft das Lastaufnahmemittel (9) angehoben wird.

8. Steuerverfahren nach Anspruch 6 oder 7, **dadurch gekennzeichnet, dass** in dem Betriebsmodus "Fügen I" von der Steuerung (4) die von dem Bediener aufgebrachte Kraft gegenüber dem Betriebsmodus "Balancieren" mit einer erhöhten Empfindlichkeit überwacht wird und somit die von dem Bediener aufgebrachte Kraft in Richtung auf eine geringere Geschwindigkeit zum Anheben und Senken des Lastaufnahmemittels (9) ausgewertet wird.

9. Steuerverfahren nach einem der Ansprüche 6 bis 8, **dadurch gekennzeichnet, dass** in dem Betriebsmodi "Fügen I" in der Steuerung (4) die Geschwindigkeit zum Anheben und Absenkens des Lastaufnahmemittels (9) im Bereich von 2 mm/s bis 8 mm/s eingestellt wird.

10. Steuerverfahren nach einem der Ansprüche 6 bis 9, **dadurch gekennzeichnet, dass** in dem Betriebsmodus "Fügen I" von der Steuerung (4) ein Anstoßen, Aufsetzen, Hängenbleiben beziehungsweise Verkanten der Last (20) über eine sogenannte Differentialüberwachung festgestellt wird, in der bestimmte zeitliche Differentiale der von dem Kraftsensor gemessenen Kraft mit einem Grenzwert verglichen werden und bei Überschreiten des Grenzwertes innerhalb des Betriebsmodus "Fügen I" der Austariervorgang gestartet wird.

11. Steuerverfahren nach Anspruch 1 oder 2, **dadurch gekennzeichnet, dass** in einem Betriebsmodus "Fügen II" von der Steuerung (4) der Hubmotor (3) in der Weise angesteuert wird, dass das Lastaufnahmemittel (9) angehoben wird, solange keine von einem Bediener auf die Last (20), das Lastaufnahmemittel (9) und/oder den Steuergriff (6) aufgebrachte Kraft nach unten wirkt, und dass das Lastaufnahmemittel (9) abgesenkt wird, wenn eine von einem Bediener auf die Last (20), das Lastaufnahmemittel (9) und/oder den Steuergriff (6) aufgebrachte Kraft nach unten wirkt.

12. Steuerverfahren nach Anspruch 11, **dadurch gekennzeichnet, dass** in dem Betriebsmodus "Fügen II" von der Steuerung (4) die von dem Bediener aufgebrachte Kraft gegenüber dem Betriebsmodus "Balancieren" mit einer erhöhten Empfindlichkeit überwacht wird und somit die von dem Bediener aufgebrachte Kraft in Richtung auf eine geringere Geschwindigkeit zum Anheben und Senken des Lastaufnahmemittels (9) ausgewertet wird.

13. Steuerverfahren nach Anspruch 6 bis 12, **dadurch gekennzeichnet, dass** in den Betriebsmodi "Fügen I" und "Fügen II" von der Steuerung (4) eine Häufigkeit von Richtungswechseln der Bewegung des Lastaufnahmemittels (9) überwacht wird und eine Geschwindigkeit des Anhebens und/oder Absenkens Lastaufnahmemittels (9) reduziert wird und/oder in den Betriebsmodus "Halten" umgeschaltet wird, wenn die Häufigkeit einen vorgewählten Grenzwert überschreitet.

14. Steuerverfahren nach einem der Ansprüche 1 bis 13, **dadurch gekennzeichnet, dass** in dem Betriebsmodus "Aufnehmen" und in dem Betriebsmodus "Fügen II" in der Steuerung (4) die Geschwindigkeit zum Anheben und Absenken des Lastaufnahmemittels (9) im Bereich von 2 mm/s bis 10 mm/s eingestellt wird.

15. Steuerverfahren nach einem der Ansprüche 1 bis 14, **dadurch gekennzeichnet, dass** in einem Betriebsmodus "Wiegen" von der Steuerung (4) eine auf den Kraftsensor (7) wirkende Lastkraft gemessen wird.

16. Steuerverfahren nach Anspruch 15, **dadurch gekennzeichnet, dass** der Betriebsmodus "Wiegen" von der Steuerung (4) gestartet wird, wenn die Hand von dem Steuergriff (6) gelöst wird.

17. Balancier-Hebezeug (1), das einen über eine Steuerung (4) ansteuerbaren Hubmotor (3) umfasst, der über einen Steuergriff (6) mit einem Kraftsensor (7) ein Lastaufnahmemittel (9) hebt und senkt, **dadurch gekennzeichnet, dass** das Balancier-Hebezeug (1) mit einem Steuerverfahren nach einem der Ansprüche 1 bis 16 arbeitet.

## Claims

1. Method of control for a balancing hoist (1) comprising a lifting motor (3) which is able to be operated by means of a control system (4) and which, via a control handle (6) having a force sensor (7), raises and lowers a load pick-up means (9), in which method, in a "balance" mode of operation, the load pick-up means (9), carrying or not carrying a load (20) which has been picked up, is raised or lowered in response to a force from an operator by means of the control system (4), **characterised in that** a "pick up" mode of operation or a assembly mode of operation is selected, in which the load pick-up means (9) is moved automatically in the raising or lowering direction by the control system (4) as a function of the signals sensed by the force sensor (7), without being acted on by the force from an operator.

2. Method of control according to claim 1, **characterised in that** a force which would otherwise cause the above automatic movement in the "balance" mode of operation is not processed by the control system (4).

3. Method of control according to claim 1 or 2, **characterised in that**, in the "pick up" mode of operation, the lifting motor (3) is operated by the control system (4) in such a way that the load pick-up means (9) is raised until such time as a force which exceeds a preselected limiting value is measured by the force sensor (7), and a change is then made by the control system (4) to a "hold" mode of operation in which the load pick-up means (9) is held stationary.

4. Method of control according to claim 3, **characterised in that**, in the "pick up" mode of operation, the limiting value, which is preferably in the range from 10N to 100N, is preset in the control system (4).

5. Method of control according to one of claims 1 to 4, **characterised in that**, in a "hold" mode of operation, a brake (8) which acts on the load pick-up means (9) is actuated by the control system (4).

6. Method of control according to claim 1, **characterised in that**, in a "assembly" mode of operation I, the lifting motor (3) is operated by the control system (4) in such a way that the load pick-up means (9) is raised and lowered automatically by the control system (4) in a taring procedure until such time as a force previously found for the load (20), the load pick-up means (9) and/or the control handle (6) by taring is measured.

7. Method of control according to claim 6, **characterised in that**, when a force measured is higher than the force found by taring, the load pick-up means (9) is lowered and, when a force measured is lower than the force found by taring, the load pick-up means (9) is raised.

8. Method of control according to claim 6 or 7, **characterised in that**, in "assembly" mode of operation I, the force exerted by the operator is monitored by the control system (4) with increased sensitivity compared with the "balance" mode of operation and the force exerted by the operator is analysed in this way to give a lower speed of raising and lowering the load pick-up means (9).

9. Method of control according to one of claims 6 to 8, **characterised in that**, in "assembly" mode of operation I, the speed of raising and lowering the load pick-up means (9) is set in the control system (4) in the range from 2 mm/s to 8 mm/s.

10. Method of control according to one of claims 6 to 9, **characterised in that**, in "assembly" mode of operation I, any colliding, setting-down, catching or tipping of the load (20) is detected by the control system (4) by so-called differential monitoring in which certain time-based differentials of the force measured by the force sensor are compared with a limiting value and, if the limiting value is exceeded, the taring procedure in "assembly" mode of operation I is started.

11. Method of control according to claim 1 or 2, **characterised in that**, in a "assembly" mode of operation II, the lifting motor (3) is operated by the control system (4) in such a way that the load pick-up means (9) is raised for as long as there is no force acting in the downward direction exerted by an operator on the load (20), the load pick-up means (9) and/or the control handle (6), and **in that** the load pick-up means (9) is lowered if there is a force acting in the downward direction exerted by an operator on the load (20), the load pick-up means (9) and/or the control handle (6).

12. Method of control according to claim 11, **characterised in that**, in "assembly" mode of operation II, the force exerted by the operator is monitored by the control system (4) with increased sensitivity compared with the "balance" mode of operation and the force exerted by the operator is analysed in this way to give a lower speed of raising and lowering the load pick-up means (9).

13. Method of control according to claims 6 to 12, **characterised in that**, in "assembly" modes of operation I and II, a frequency of change of direction of the movement of the load pick-up means (9) is monitored by the control system (4) and, if the frequency exceeds a preselected limiting value, a speed of raising and/or lowering the load pick-up means (9) is reduced and/or a change is made to the "hold" mode of operation.

14. Method of control according to one of claims 1 to 13, **characterised in that**, in the "pick up" mode of operation and in "assembly" mode of operation II, the speed of raising and lowering the load pick-up means (9) is set in the control system (4) in the range from 2 mm/s to 10 mm/s.

15. Method of control according to one of claims 1 to 14, **characterised in that**, in a "weigh" mode of operation, a load-applied force acting on the force sensor (7) is measured by the control system (4).

16. Method of control according to claim 15, **characterised in that** the "weigh" mode of operation is started by the control system (4) if the hand is removed from the control handle (6).

17. Balancing hoist (1) comprising a lifting motor (3) which is able to be operated by means of a control system (4) and which, via a control handle (6) having a force sensor (7), raises and lowers a load pick-up means (9), **characterised in that** the balancing hoist (1) functions by a method of control according to one of claims 1 to 16.

## Revendications

1. Procédé de commande d'un engin de levage à balancier (1) comportant un moteur de levage (3) qui peut être commandé par un dispositif de commande (4) et qui soulève et abaisse un moyen de réception de charge (9) par l'intermédiaire d'une poignée de commande (6) pourvue d'un capteur de force (7), procédé de commande dans lequel, dans un mode de fonctionnement « Équilibrage », le moyen de réception de charge (9) muni ou non d'une charge (20) est soulevé ou abaissé par l'intermédiaire du dispositif de commande (4) en réponse à la force exercée par un opérateur, **caractérisé en ce qu'**un mode de fonctionnement « Réception » ou un mode de fonctionnement « Assemblage » est sélectionné dans lequel le moyen de réception de charge (9) est déplacé automatiquement, sans l'influence de la force exercée par un opérateur à partir du dispositif de commande (4), dans le sens de levage ou le sens d'abaissement en réponse aux signaux générés par le capteur de force (7).

2. Procédé de commande selon la revendication 1, **caractérisé en ce que** le dispositif de commande (4) ne traite pas une force qui provoque par ailleurs, dans le mode de fonctionnement « Équilibrage », ce mouvement automatique.

3. Procédé de commande selon la revendication 1 ou 2, **caractérisé en ce que**, dans le mode de fonctionnement « Réception », le moteur de levage (3) est commandé par le dispositif de commande (4) de telle manière que le moyen de réception de charge (9) est soulevé jusqu'à ce que le capteur de force (7) mesure une force qui est supérieure à une limite présélectionnée puis le dispositif de commande (4) passe dans un mode de fonctionnement « Maintien », dans lequel le moyen de réception de charge (9) est maintenu stationnaire.

4. Procédé de commande selon la revendication 3, **caractérisé en ce que**, dans le mode de fonctionnement « Réception », la limite est prédéfinie dans le dispositif de commande (4), de préférence dans la gamme allant de 10N à 100N.

5. Procédé de commande selon l'une des revendications 1 à 4, **caractérisé en ce que**, dans un mode de fonctionnement « Maintien », un frein (8) agissant sur le moyen de réception de charge (9) est actionné par le dispositif de commande (4).

6. Procédé de commande selon la revendication 1, **caractérisé en ce que**, dans un mode de fonctionnement « Assemblage I », le moteur de levage (3) est commandé par le dispositif de commande (4) de telle manière que le moyen de réception de charge (9) est soulevé et abaissé automatiquement dans un processus de rééquilibrage par le dispositif de commande (4) jusqu'à ce que le capteur de force (7) mesure une force préalablement rééquilibrée par rapport à la charge (20), au moyen de réception de charge (9) et/ou à la poignée de commande (6).

7. Procédé de commande selon la revendication 6, **caractérisé en ce que** lors d'une mesure supérieure de la force rééquilibrée le moyen de réception de charge (9) est abaissé, et lors d'une mesure inférieure de la force rééquilibrée le moyen de réception de charge (9) est soulevé..

8. Procédé de commande selon la revendication 6 ou 7, **caractérisé en ce que**, dans le mode de fonctionnement « Assemblage I », le dispositif de commande (4) surveille avec une sensibilité accrue la force appliquée par l'opérateur par rapport au mode de fonctionnement « Équilibrage » et évalue donc la force appliquée par l'opérateur dans le sens d'une plus faible vitesse de levage et d'abaissement du moyen de réception de charge (9).

9. Procédé de commande selon l'une des revendications 6 à 8, **caractérisé en ce que**, dans le mode de fonctionnement « Assemblage I », la vitesse de levage et d'abaissement du moyen de réception de charge (9) est réglée dans la gamme allant de 2 mm/s à 8 mm/s dans le dispositif de commande (4).

10. Procédé de commande selon l'une des revendications 6 à 9, **caractérisé en ce que**, dans le mode de fonctionnement « Assemblage I », le dispositif de commande (4) définit un processus de butée, de placement, de maintien de suspension ou de blocage de la charge (20) par une surveillance dite différentielle dans laquelle des différentielles spécifiques par rapport au temps de la force mesurée par le capteur de force sont comparées à une limite et, lorsque la limite est franchie dans le mode de fonctionnement « Assemblage I », le processus de rééquilibrage est démarré.

11. Procédé de commande selon la revendication 1 ou 2, **caractérisé en ce que**, dans un mode de fonctionnement « Assemblage II », le dispositif de commande (4) commande le moteur de levage (3) de telle manière que le moyen de réception de charge (9) est soulevé tant qu'aucune force appliquée par un opérateur sur la charge (20), le moyen de réception de charge (9) et/ou la poignée de commande (6) n'agit vers le bas et **en ce que** le moyen de réception de charge (9) est abaissé lorsqu'une force appliquée par un opérateur sur la charge (20), le moyen de réception de charge (9) et/ou la poignée de commande (6) agit vers le bas.

12. Procédé de commande selon la revendication 11, **caractérisé en ce que**, dans le mode de fonctionnement « Assemblage II », le dispositif de commande (4) surveille la force appliquée par l'opérateur avec une sensibilité accrue par rapport au mode de fonctionnement « Équilibrage » et évalue donc la force appliquée par l'opérateur dans le sens d'une plus faible vitesse de levage et d'abaissement du moyen de réception de charge (9).

13. Procédé de commande selon les revendications 6 à 12, **caractérisé en ce que**, dans les modes de fonctionnement « Assemblage I » et « Assemblage II », le dispositif de commande (4) surveille la fréquence de changement de sens du mouvement du moyen de réception de charge (9) et réduit la vitesse de levage et/ou d'abaissement du moyen de réception de charge (9) et/ou la modifie dans le mode de fonctionnement « Maintien » lorsque la fréquence dépasse une limite présélectionnée.

14. Procédé de commande selon l'une des revendications 1 à 13, **caractérisé en ce que**, dans le mode de fonctionnement « Réception » et dans le mode de fonctionnement «Assemblage II », la vitesse de levage et d'abaissement du moyen de réception de charge (9) est réglée dans la gamme allant de 2 mm/s à 10 mm/s dans le dispositif de commande (4).

15. Procédé de commande selon l'une des revendications 1 à 14, **caractérisé en ce que**, dans un mode de fonctionnement « Pesage », le dispositif de commande (4) mesure la force de charge agissant sur le capteur de force (7).

16. Procédé de commande selon la revendication 15, **caractérisé en ce que** le mode de fonctionnement « Pesage » est démarré par le dispositif de commande (4) lorsque la main lâche la poignée de commande (6).

17. Engin de levage à balancier (1) comprenant un moteur de levage (3) qui peut être commandé par un dispositif de commande (4) et qui soulève et abaisse un moyen de réception de charge (9) par l'intermédiaire d'une poignée de commande (6) munie d'un capteur de force (7), **caractérisé en ce que** l'engin de levage à balancier (1) fonctionne conformément à un procédé de commande selon l'une des revendications 1 à 16.
